# EUROPEAN PATENT APPLICATION

(11) **EP 4 746 237 A1**
(43) Date of publication of application: **20.05.2026**
(21) Application number: 24838255.8
(22) Date of filing: 17.01.2024
(51) Int. Cl.: H02J 5/00

(54) **PLANT POWER SUPPLY SYSTEM**

(30) Priority: 13.07.2023 CN 202310861128
(71) Applicant: Contemporary Amperex Technology Co., Limited, Ningde, Fujian 352100 (CN)
(72) Inventor: WANG, Jiawei, Ningde, Fujian 352100 (CN); ZENG, Bo, Ningde, Fujian 352100 (CN); ZHANG, Zhiyong, Ningde, Fujian 352100 (CN)
(74) Representative: Gong, Jinping
(86) International application number: PCT/CN2024/072833
(87) International publication number: WO 2025/010991

(57) **Abstract**

The present application relates to a plant power supply system. The plant power supply system includes a power conversion system and a busbar box, where the busbar box is provided with a direct current (DC) busbar, the power conversion system being connected to the DC busbar, and the DC busbar being further connected to an electrical device, where the power conversion system is configured to convert alternating current (AC) power input from an external AC power source into DC power; and the DC busbar is configured to transmit the DC power to the electrical device, and receive discharge energy from the electrical device and return the discharge energy to the electrical device. By adopting the plant power supply system of the present application, power can be effectively supplied to electrical devices, and costs can be reduced and the installation and commissioning cycle can be shortened.

## Description

### CROSS-REFERENCE

The present application claims the benefit of Chinese Patent Application No. 2023108611286, entitled "PLANT POWER SUPPLY SYSTEM", filed on July 13, 2023, which is incorporated herein by reference in its entirety.

### TECHNICAL FIELD

The present application relates to the technical field of battery manufacturing and, in particular, to a plant power supply system.

### BACKGROUND

With the development of new energy technology, batteries are being used in more and more fields. For example, batteries are used to construct energy storage systems, and batteries are used as power for new energy vehicles.

In battery production lines, there are battery manufacturing devices, testing devices, and cell formation devices, and the like. Currently, how to supply power to testing devices and cell formation devices, etc., has become a technical problem that urgently needs to be solved.

### SUMMARY OF THE INVENTION

Based on the aforementioned problem, the present application provides a plant power supply system, which can effectively supply power to electrical devices, and can reduce costs and shorten the installation and commissioning cycle.

The present application provides a plant power supply system. The plant power supply system includes a power conversion system and a busbar box, where the busbar box is provided with a direct current (DC) busbar, the power conversion system being connected to the DC busbar, and the DC busbar being further connected to an electrical device, where the power conversion system is configured to convert alternating current (AC) power input from an external AC power source into DC power; and the DC busbar is configured to transmit the DC power to the electrical device, and receive discharge energy from the electrical device and return the discharge energy to the electrical device.

In the technical solution of the embodiments of the present application, a power conversion system is adopted to convert AC power into DC power, which can reduce the configured power, improve the charging conversion efficiency and the discharging conversion efficiency, and reduce plug boxes. Therefore, on the basis of ensuring the power supply demand of testing devices and cell formation devices, costs can be reduced, and the installation and commissioning cycle can be shortened. Further, the DC busbar in the busbar box can not only function to transmit DC power, but also can achieve recycling of energy, thereby achieving the effects of energy saving and consumption reduction, and cost reduction.

In some embodiments, the busbar box is further provided with a DC circuit breaker, the DC circuit breaker being connected between the power conversion system and the DC busbar. In the technical solution of the embodiments of the present application, the DC circuit breaker may cut off the DC output of the power conversion system in various scenarios, thereby protecting the power conversion system and the electrical device.

In some embodiments, the busbar box is further provided with an electrical device circuit breaker, the electrical device circuit breaker being connected between the DC busbar and the electrical device. In the technical solution of the embodiments of the present application, the electrical device circuit breaker may cut off the connection between the DC busbar and the electrical device in various scenarios, thereby protecting the DC busbar and the electrical device.

In some embodiments, the power conversion system includes a main power conversion system and a backup power conversion system, and the busbar box is further provided with a switching circuit breaker, the switching circuit breaker being connected to each of the main power conversion system, the backup power conversion system, and the electrical device, where the switching circuit breaker is configured to, when the main power conversion system fails, disconnect a connection between the main power conversion system and the electrical device, and connect the backup power conversion system to the electrical device. In the technical solution of the embodiments of the present application, by providing the switching circuit breaker, in a case where the main power conversion system fails, the backup power conversion system can be used to replace the main power conversion system, thereby ensuring normal power supply to the electrical device.

In some embodiments, a plurality of main power conversion systems, a plurality of busbar boxes, and a plurality of electrical devices are provided, and one backup power conversion system is provided, where each of the main power conversion systems is connected to one of the electrical devices through a switching circuit breaker in a corresponding one of the busbar boxes; and the backup power conversion system is connected to each of the plurality of the electrical devices through a switching circuit breaker in a respective one of the plurality of busbar boxes. In the technical solution of the embodiments of the present application, replacing the main power conversion system using the backup power conversion system can ensure normal power supply to the electrical device.

In some embodiments, the busbar box includes an electrical device interface, the electrical device interface being connected to the electrical device. In the technical solution of the embodiments of the present application, the busbar box is provided with the electrical device interface, which facilitates connecting the busbar box to the electrical device, thereby supplying power to the electrical device, and setting relevant parameters of the electrical device, and collecting and performing analytical statistics on data of the electrical device.

In some embodiments, the electrical device includes a plurality of electrical units, each of the electrical units being connected to the DC busbar through the electrical device interface. In the technical solution of the embodiments of the present application, adopting the electrical device interface facilitates supplying power to each electrical unit.

In some embodiments, a power adaptation coefficient between the power conversion system and the electrical device is within a range of 0.3 to 0.7. In the technical solution of the embodiments of the present application, setting the power adaptation coefficient can better supply power to the electrical device.

In some embodiments, the electrical device includes at least one of a capacity testing machine and a cell formation machine. In the technical solution of the embodiments of the present application, the power supply device may supply power to various electrical devices and is suitable for various application scenarios.

In some embodiments, the electrical device includes a capacity grading cabinet, the capacity grading cabinet being connected to the DC busbar in the busbar box of the plant power supply system. In the technical solution of the embodiments of the present application, adopting the capacity grading cabinet allows for setting charging parameters and discharging parameters of the battery cell, and also allows for collecting charging data and discharging data of the battery cell, and performing statistical processing on the data to screen battery cells, thereby better assisting battery manufacturing and improving battery quality.

In some embodiments, the capacity grading cabinet is provided with a control chip and a battery cell, the control chip being configured to receive a feedback signal from the battery cell, and control a charging and discharging process and a charging and discharging current based on the feedback signal. In the technical solution of the embodiments of the present application, adopting the control chip can effectively control the charging and discharging of the battery cell, thereby efficiently performing battery cell testing and improving the efficiency of battery production.

### DESCRIPTION OF DRAWINGS

Various other advantages and benefits will become apparent to those of ordinary skill in the art upon reading the following detailed description of the optional implementations. The accompanying drawings are for the purpose of illustrating the optional implementations only and are not to be considered a limitation to the present application. Moreover, in all of the accompanying drawings, the same components are indicated by the same reference numerals. In the accompanying drawings:
FIG. 1 is a first schematic structural diagram of a plant power supply system according to an embodiment of the present application;
FIG. 2 is a second schematic structural diagram of a plant power supply system according to an embodiment of the present application;
FIG. 3 is a third schematic structural diagram of a plant power supply system according to an embodiment of the present application;
FIG. 4 is a fourth schematic structural diagram of a plant power supply system according to an embodiment of the present application;
FIG. 5 is a fifth schematic structural diagram of a plant power supply system according to an embodiment of the present application;
FIG. 6 is a sixth schematic structural diagram of a plant power supply system according to an embodiment of the present application;
FIG. 7 is a seventh schematic structural diagram of a plant power supply system according to an embodiment of the present application;
FIG. 8 is an eighth schematic structural diagram of a plant power supply system according to an embodiment of the present application; and
FIG. 9 is a schematic structural diagram of a capacity grading cabinet according to an embodiment of the present application.

### DETAILED DESCRIPTION

The embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first", "second", etc., are only used for distinguishing different objects, and cannot be understood as indicating or implying relative importance or implying the number, specific order or primary and secondary relationship of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. Moreover, the character "/" herein generally indicates that the context objects are in an "or" relationship.

In the description of the embodiments of the present application, the term "a plurality of' refers to two or more (including two). Similarly, "a plurality of groups" refers to two or more (including two) groups, and "a plurality of sheets" refers to two or more (including two) sheets.

In the description of the embodiments of the present application, unless otherwise expressly specified and limited, the technical terms "mount," "connect," "connection," "fix", etc. should be understood in a broad sense, such as, a fixed connection, a detachable connection, or an integral connection; a mechanical connection, or an electrical connection; directly connect, indirectly connect through an intermediate medium, an internal communication of two elements, or interaction between two elements. For those of ordinary skill in the art, the specific meanings of the aforementioned terms in the embodiments of the present application can be understood according to specific situations.

With the development of new energy technology, batteries are being used in more and more fields. For example, batteries are used to construct energy storage systems, and batteries are used as power for new energy vehicles. In battery production lines, there are battery manufacturing devices, testing devices, and cell formation devices, and the like. Currently, an alternating current direct current (ACDC) power converter is often used to supply power to testing devices, cell formation devices, and the like; that is, the ACDC power converter converts AC power into DC power to supply power to testing devices and cell formation devices. However, the ACDC power converter suffers from some problems. For example, to ensure the normal operation of the testing devices, the ACDC power converter needs to be configured according to the maximum power, resulting in high cost of the ACDC power converter; the charging conversion efficiency and the discharging conversion efficiency of the ACDC power converter are not high, leading to a further increase in cost; the ACDC power converter requires numerous plug boxes in the plant to meet device interface requirements, resulting in high cost and a relatively long installation and commissioning cycle. Therefore, how to supply power to testing devices, cell formation devices, and the like has become a technical problem that urgently needs to be solved.

The embodiments of the present application provide a plant power supply system. The plant power supply system includes a power conversion system (PCS) and a busbar box, where the busbar box is provided with a DC busbar, the energy storage converter being connected to the DC busbar, and the DC busbar being further connected to an electrical device, where the energy storage converter is configured to convert AC power input from an external AC power source into DC power; and the DC busbar is configured to transmit the DC power to the electrical device, and receive discharge energy from the electrical device and return the discharge energy to the electrical device. Compared with using the ACDC power converter, in the embodiments of the present application, a power conversion system is adopted to convert AC power into DC power, which can reduce the configured power, improve the charging conversion efficiency and the discharging conversion efficiency, and reduce plug boxes. Therefore, on the basis of ensuring the power supply demand of testing devices and cell formation devices, costs can be reduced, and the installation and commissioning cycle can be shortened. Further, the DC busbar in the busbar box can not only function to transmit DC power, but also can achieve recycling of energy, thereby achieving the effects of energy saving and consumption reduction, and cost reduction.

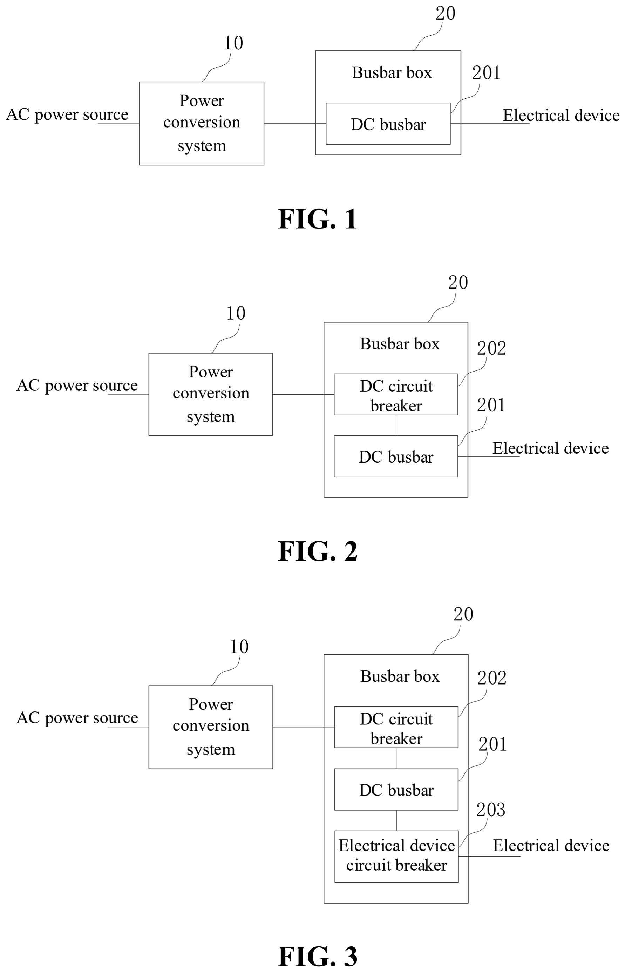

According to some embodiments of the present application, referring to FIG. 1, a plant power supply system is provided. The plant power supply system includes a power conversion system 10 and a busbar box 20, where the busbar box 20 is provided with a DC busbar 201, the power conversion system 10 being connected to the DC busbar 201, and the DC busbar 201 being further connected to an electrical device, where the power conversion system 10 is configured to convert AC power input from an external AC power source into DC power; and the DC busbar 201 is configured to transmit the DC power to the electrical device, and receive discharge energy from the electrical device and return the discharge energy to the electrical device.

In the embodiments of the present application, the plant power supply system includes the power conversion system 10 and the busbar box 20, where the busbar box 20 is provided with the DC busbar 201, the power conversion system 10 being connected to an AC power source external to the plant power supply system and connected to the DC busbar 201, and the DC busbar 201 being further connected to the electrical device. The external AC power source inputs AC power to the power conversion system 10, the power conversion system 10 converts the AC power into DC power, and transmits the DC power to the DC busbar 201, and the DC busbar 201 transmits the DC power to an electrical device on a battery cell production line.

For example, the power conversion system 10 is connected to the external AC power source and to the DC busbar 201, and the DC busbar 201 is further connected to a capacity testing machine on the battery cell production line, where the capacity testing machine is a device configured to perform charging tests and discharging tests on a battery cell. The AC power source inputs 380V AC power to the power conversion system 10, the power conversion system 10 converts the 380V AC power into 700V DC power, and transmits the 700V DC power to the DC busbar 201, and the DC busbar 201 transmits the 700V DC power to the capacity testing machine on the battery cell production line.

During a discharging process of the electrical device, a portion of discharge energy is transmitted to the DC busbar 201 along a connection line between the DC busbar 201 and the electrical device. In this case, the DC busbar 201 receives this portion of the discharge energy, and retransmits the discharge energy back to the electrical device, enabling the electrical device to reuse this portion of energy, thereby achieving an energy-saving and consumption-reducing effect.

For example, the capacity testing machine performs charging tests on one part of battery cells and performs discharging tests on another part of battery cells; during the testing process, discharge energy is transmitted to the DC busbar 201 along the connection line between the capacity testing machine and the DC busbar 201, and the DC busbar 201 transmits the discharge energy back to the capacity testing machine to charge the battery cells undergoing the charging tests.

Optionally, the DC busbar may adopt a copper busbar.

Optionally, a positive connection line and a negative connection line are used for connection between the power conversion system 10 and the DC busbar 201, and both the positive connection line and the negative connection line may employ 2 cables. Both the positive connection line and the negative connection line may employ soft copper wires with a cross-sectional area of 300 mm², and may be configured with connection terminals of model SC300-10.

It should be noted that the connection lines are not limited to the quantity and type described above and may be set according to actual conditions.

Taking a current plant of a battery cell production line as an example, the electrical device includes a cell formation machine and a capacity testing machine; the configured power of the ACDC power converter for the cell formation machine is 3136 kW, and the configured power for the capacity testing machine is 7560 kW, and thus the total configured power of the ACDC power converter is 10696 kW. The configured power of the power conversion system for the cell formation machine is 2200 kW, and the configured power for the capacity testing machine is 4400 kW, and thus the total configured power of the power conversion system is 6600 kW. Furthermore, the charging conversion efficiency of the ACDC power converter is 94%, and the discharging conversion efficiency is 90%; whereas the charging conversion efficiency of the power conversion system is 99%, and the discharging conversion efficiency is 99%. Compared with adopting a parallel power supply, adopting the power conversion system results in lower configured power, higher charging and discharging conversion efficiency, and better economic benefits. Further, adopting the ACDC power converter requires 70 plug boxes to meet device interface requirements, whereas adopting the power conversion system requires no plug boxes. Therefore, adopting the power conversion system results in lower system cost. Additionally, adopting the ACDC power converter requires the plant to install 2 partition walls, whereas adopting the power conversion system requires no partition walls in the plant. Therefore, adopting the power conversion system can reduce the installation and commissioning time by 10 days, thereby shortening the installation and commissioning cycle.

From the above data, it can be intuitively seen that, compared with adopting the ACDC power converter, adopting the power conversion system to supply power to the electrical devices on the battery cell production line can significantly reduce costs and shorten the installation and commissioning cycle.

In the aforementioned embodiments, the plant power supply system includes a power conversion system and a busbar box, where the busbar box is provided with a DC busbar, the power conversion system being connected to the DC busbar, and the DC busbar being further connected to an electrical device, where the power conversion system is configured to convert AC power input from an external AC power source into DC power; and the DC busbar is configured to transmit the DC power to the electrical device, and receive discharge energy from the electrical device and return the discharge energy to the electrical device. Compared with using the ACDC power converter, in the technical solution of the embodiments of the present application, a power conversion system is adopted to convert AC power into DC power, which can reduce the configured power, improve the charging conversion efficiency and the discharging conversion efficiency, and reduce plug boxes. Therefore, on the basis of ensuring the power supply demand of testing devices and cell formation devices, costs can be reduced, and the installation and commissioning cycle can be shortened. Further, the DC busbar in the busbar box can not only function to transmit DC power, but also can achieve recycling of energy, thereby achieving the effects of energy saving and consumption reduction, and cost reduction.

According to some embodiments of the present application, referring to FIG. 2, the busbar box 20 is further provided with a DC circuit breaker 202, the DC circuit breaker 202 being connected between the power conversion system 10 and the DC busbar 201.

In the embodiments of the present application, the busbar box 20 is provided with the DC circuit breaker 202, the DC circuit breaker 202 being connected to the power conversion system 10 via a cable, and the DC circuit breaker 202 being configured to cut off a DC output of the power conversion system 10.

For example, in a case where the power conversion system 10 fails, the DC output of the power conversion system 10 may be cut off by the DC circuit breaker 202; or, in a case where the power conversion system 10 does not need to supply power to the electrical device, the DC output of the power conversion system 10 may also be cut off by the DC circuit breaker 202. It should be noted that the application scenarios of the DC circuit breaker 202 are not limited to the aforementioned descriptions and may also be applied to other scenarios.

In the aforementioned embodiments, the busbar box is further provided with a DC circuit breaker, the DC circuit breaker being connected between the power conversion system and the DC busbar. In the technical solution of the embodiments of the present application, the DC circuit breaker may cut off the DC output of the power conversion system in various scenarios, thereby protecting the power conversion system and the electrical device.

According to some embodiments of the present application, referring to FIG. 3, the busbar box 20 is further provided with an electrical device circuit breaker 203, the electrical device circuit breaker 203 being connected between the DC busbar 201 and the electrical device.

In the embodiments of the present application, the busbar box 20 is further provided with the electrical device circuit breaker 203, where one end of the electrical device circuit breaker 203 is connected to the DC busbar 201, and the other end is connected to the electrical device. The electrical device circuit breaker 203 is configured to cut off a connection between the DC busbar 201 and the electrical device.

For example, in a case where the power conversion system 10 fails, the connection between the DC busbar 201 and the electrical device may be cut off by the electrical device circuit breaker 203; or, in a case where the DC busbar 201 fails, the connection between the DC busbar 201 and the electrical device may be cut off by the electrical device circuit breaker 203; or, in a case where there is no need to supply power to the electrical device, the connection between the DC busbar 201 and the electrical device may be cut off by the electrical device circuit breaker 203. It should be noted that the application scenarios of the electrical device circuit breaker 203 are not limited to the aforementioned descriptions and may also be applied to other scenarios.

In the aforementioned embodiments, the busbar box is further provided with an electrical device circuit breaker, the electrical device circuit breaker being connected between the DC busbar and the electrical device. In the technical solution of the embodiments of the present application, the electrical device circuit breaker may cut off the connection between the DC busbar and the electrical device in various scenarios, thereby protecting the DC busbar and the electrical device.

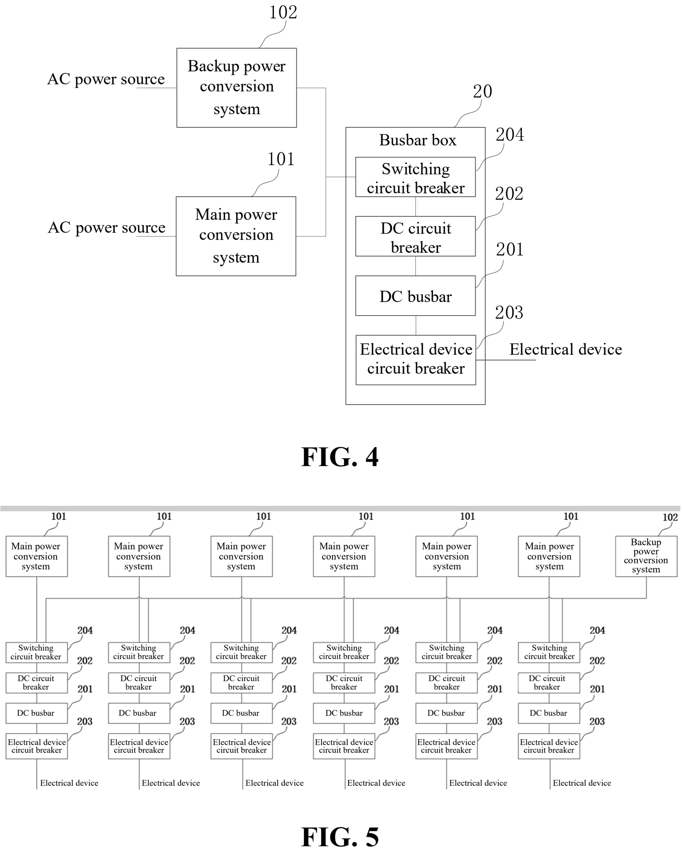

According to some embodiments of the present application, referring to FIG. 4, the power conversion system 10 includes a main power conversion system 101 and a backup power conversion system 102, and the busbar box 20 is further provided with a switching circuit breaker 204, the switching circuit breaker 204 being connected to each of the main power conversion system 101, the backup power conversion system 102, and the electrical device, where the switching circuit breaker 204 is configured to, when the main power conversion system 101 fails, disconnect a connection between the main power conversion system 101 and the electrical device, and connect the backup power conversion system 102 to the electrical device.

In the embodiments of the present application, the busbar box 20 is further provided with a switching circuit breaker 204, the switching circuit breaker 204 being connected to each of the main power conversion system 101, the backup power conversion system 102, and the electrical device. In a case where the main power conversion system 101 fails, the switching circuit breaker 204 may be used to disconnect a connection between the main power conversion system 101 and the electrical device, and the switching circuit breaker 204 may be used to connect the backup power conversion system 102 to the electrical device.

In some embodiments, a plurality of main power conversion systems 101, a plurality of busbar boxes 20, and a plurality of electrical devices are provided, and one backup power conversion system 102 is provided, where each of the main power conversion systems 101 is connected to one of the electrical devices through a switching circuit breaker 204 in a corresponding one of the busbar boxes 20; and the backup power conversion system 102 is connected to each of the plurality of the electrical devices through a switching circuit breaker 204 in a respective one of the plurality of busbar boxes 20.

In the embodiments of the present application, the plant power supply system may include a plurality of power conversion systems, where one of the power conversion systems may be used as the backup power conversion system 102, and the remaining power conversion systems may all be used as the main power conversion systems 101. Referring to FIG. 5, the plant power supply system includes 7 power conversion systems, where 1 power conversion system is used as the backup power conversion system 102, and the remaining 6 power conversion systems are all used as the main power conversion systems 101. Each of the main power conversion systems 101 is connected to one of the electrical devices through a switching circuit breaker 204 in a corresponding one of the busbar boxes 20; and the backup power conversion system 102 is connected to each of the plurality of electrical devices through a switching circuit breaker 204 in a respective one of the plurality of busbar boxes 20.

In some embodiments, the switching circuit breaker 204 may include a first switching circuit breaker 2041 and a second switching circuit breaker 2042, where the first switching circuit breaker 2041 is connected to each of the main power conversion system 101 and the electrical device, and the second switching circuit breaker 2042 is connected to each of the backup power conversion system 102 and the electrical device. In a case where the main power conversion system 101 fails, the first switching circuit breaker 204 cuts off the connection between the main power conversion system 101 and the electrical device, and the second switching circuit breaker 204 connects the backup power conversion system 102 to the electrical device.

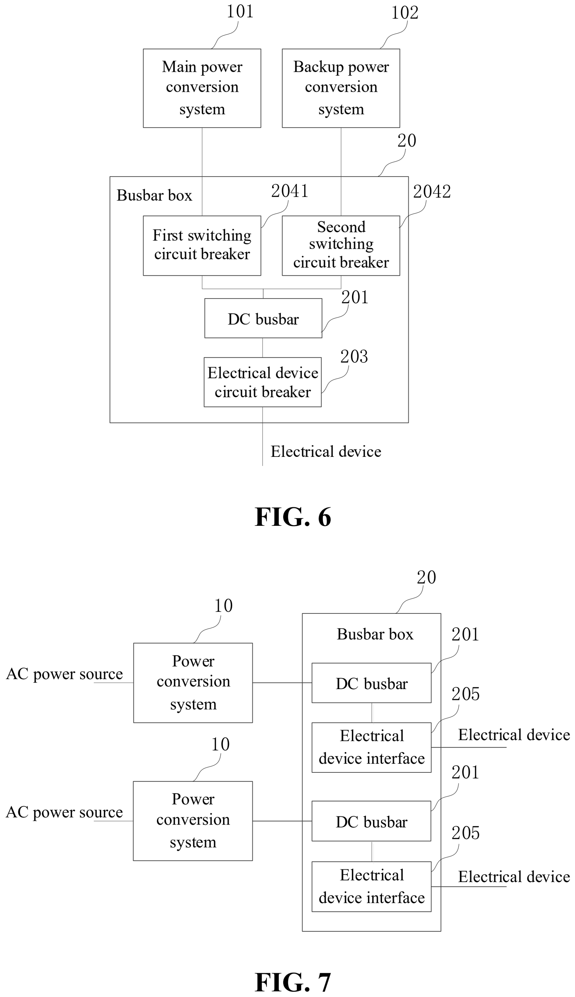

In some embodiments, the first switching circuit breaker 204 is used as the DC circuit breaker 202 corresponding to the main power conversion system 101, and the second switching circuit breaker 204 is used as the DC circuit breaker 202 corresponding to the backup power conversion system 102, as shown in FIG. 6. In this case, the circuit breakers are reused, which can save circuit breakers, thereby reducing device costs.

In the aforementioned embodiments, the power conversion system includes a main power conversion system and a backup power conversion system, and the busbar box is further provided with a switching circuit breaker, the switching circuit breaker being connected to each of the main power conversion system, the backup power conversion system, and the electrical device, where the switching circuit breaker is configured to, when the main power conversion system fails, disconnect a connection between the main power conversion system and the electrical device, and connect the backup power conversion system to the electrical device. In the technical solution of the embodiments of the present application, by providing the switching circuit breaker, in a case where the main power conversion system fails, the backup power conversion system can be used to replace the main power conversion system, thereby ensuring normal power supply to the electrical device.

According to some embodiments of the present application, referring to FIG. 7, the busbar box 20 further includes an electrical device interface 205, the electrical device interface 205 being connected to the electrical device.

In the embodiments of the present application, the busbar box 20 is provided with the electrical device interface 205, the electrical device interface 205 being connected to the electrical device. The DC power received by the DC busbar 201 is transmitted to the electrical device through the electrical device interface 205.

In some embodiments, the electrical device interface 205 includes a positive electrical device interface and a negative electrical device interface, where the positive electrical device interface is connected to a positive DC bus of the electrical device, and the negative electrical device interface is connected to a negative DC bus of the electrical device.

It can be understood that providing the busbar box with the electrical device interface facilitates connecting the busbar box to the electrical device, thereby supplying power to the electrical device.

In some embodiments, the electrical device includes a plurality of electrical units, each of the electrical units being connected to the DC busbar 201 through the electrical device interface 205.

The electrical device may include a plurality of electrical units. For example, the electrical device is a capacity testing machine, which may include a plurality of storage locations, where each storage location may accommodate a plurality of battery cells. For example, a Model A capacity testing machine has 20 storage locations, and each storage location may accommodate 24 battery cells; a Model B capacity testing machine has 20 storage locations, and each storage location may accommodate 36 battery cells.

Optionally, the busbar box 20 is provided with one electrical device interface 205, where the electrical device interface 205 is connected to each of the plurality of electrical units. For example, the electrical device interface 205 is connected to each of the 20 storage locations of the capacity testing machine.

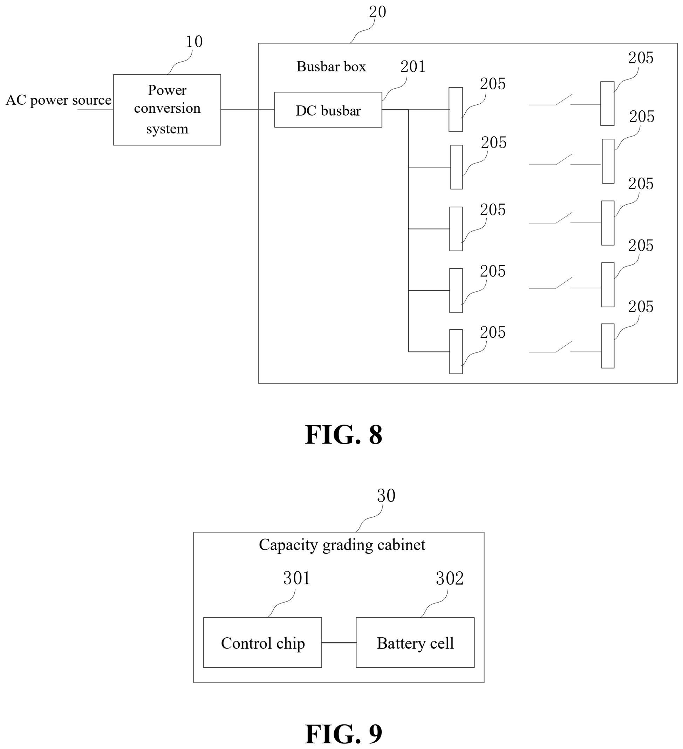

Optionally, the busbar box 20 is provided with a plurality of electrical device interfaces 205, where each of the electrical device interfaces 205 is connected to each of the plurality of electrical units. Referring to FIG. 8, the busbar box 20 is provided with 5 pairs of electrical device interfaces 205, where each pair of electrical device interfaces 205 is connected to 5 storage locations in the capacity testing machine. Each pair of electrical device interfaces includes a positive electrical device interface and a negative electrical device interface, and a switch is provided at the negative electrical device interface, where the switch may disconnect a connection between the negative electrical device interface and the electrical unit.

Optionally, the storage location may convert high-voltage direct current into low-voltage direct current, the maximum power of the storage location is 24 kw, and the charging current is 200 A.

It should be noted that the quantity of electrical units, the quantity of electrical device interfaces, and the connection relationship between the electrical device interfaces and the electrical units are not limited to the aforementioned descriptions and may be set according to actual conditions.

In the aforementioned embodiments, the electrical device includes a plurality of electrical units, where the electrical device interfaces are each connected to each of the electrical units, which facilitates supplying power to each electrical unit.

According to some embodiments of the present application, a power adaptation coefficient between the power conversion system 10 and the electrical device is within a range of 0.3 to 0.7.

In the embodiments of the present application, the power conversion system 10 may be configured, or the output power of the power conversion system 10 may be configured, according to the power consumption of the electrical device and the power adaptation coefficient.

Optionally, the power adaptation coefficient between the power conversion system 10 and the electrical device is set to 0.6, and actually reaches 0.3.

In the technical solution of the embodiments of the present application, the power adaptation coefficient between the power conversion system and the electrical device is within the range of 0.3 to 0.7, which can better supply power to the electrical device.

According to some embodiments of the present application, the electrical device includes at least one of a capacity testing machine and a cell formation machine.

In the embodiments of the present application, the electrical device in the battery cell production line may include a capacity testing machine, where the capacity testing machine may perform charging tests and discharging tests on a battery cell, and the cell formation machine may perform cell formation processing on a battery.

In the technical solution of the embodiments of the present application, the power supply device may supply power to various electrical devices and is suitable for various application scenarios.

According to some embodiments of the present application, the electrical device includes a capacity grading cabinet, the capacity grading cabinet being connected to the DC busbar 201 in the busbar box 20 of the plant power supply system.

The capacity grading cabinet may set a charging voltage, a discharging voltage, a charging current, a discharging current, a charging power, a discharging power, and the like, of the battery cell. The capacity grading cabinet may collect various data of the battery cell during the charging process and the discharging process according to the set charging parameters and discharging parameters described above and a preset frequency. The capacity grading cabinet may further, after the charging and discharging of the battery cell are completed, set a standard for screening battery cells according to battery cell capacity performance such as data cumulative values, a charging curve, and a discharging curve.

In the embodiments of the present application, the electrical device includes the capacity grading cabinet, the capacity grading cabinet being connected to the DC busbar 201 in the busbar box 20, where the capacity grading cabinet may be provided with a battery cell. The capacity grading cabinet may be the capacity testing machine; when performing a charging test on the battery cell, the capacity grading cabinet may convert the 700V DC power output by the DC busbar 201 into low voltage, and transmit the low voltage to the battery cell. The capacity grading cabinet charges the battery cell according to the set charging voltage, charging current, or charging power. Furthermore, the capacity grading cabinet collects data such as voltage, current, capacity, energy, internal resistance, temperature, etc., during the charging process of the battery cell according to a preset frequency. When performing a discharging test on the battery cell, the capacity grading cabinet may discharge the battery cell according to the set discharging voltage, discharging current, or discharging power. Furthermore, the capacity grading cabinet collects data such as voltage, current, capacity, energy, internal resistance, temperature, etc., during the discharging process of the battery cell according to the preset frequency.

After the charging and discharging of the battery cell are completed, the capacity grading cabinet determines data cumulative values, a charging curve, and a discharging curve based on voltage, current, capacity, energy, internal resistance, temperature, etc., and then sets a standard for screening battery cells based on the data cumulative values, the charging curve, and the discharging curve.

Optionally, 2 connection lines are used for connecting the DC busbar 201 and the capacity grading cabinet; the connection lines may employ soft copper wires with a cross-sectional area of 240 mm².

In the aforementioned embodiments, the electrical device includes the capacity grading cabinet, the capacity grading cabinet being connected to the DC busbar in the busbar box of the plant power supply system. In the technical solution of the embodiments of the present application, adopting the capacity grading cabinet allows for setting charging parameters and discharging parameters of the battery cell, and also allows for collecting charging data and discharging data of the battery cell, and performing statistical processing on the data to screen battery cells, thereby better assisting battery manufacturing and improving battery quality.

According to some embodiments of the present application, referring to FIG. 9, the capacity grading cabinet 30 is provided with a control chip 301 and a battery cell 302, the control chip 301 being configured to receive a feedback signal from the battery cell 302, and control a charging and discharging process and a charging and discharging current based on the feedback signal.

In the embodiments of the present application, the capacity grading cabinet 30 is provided with the control chip 301 and the battery cell 302, the control chip 301 being connected to the battery cell 302. The control chip 301 may receive the feedback signal from the battery cell 302, control the charging process and the discharging process of the battery cell 302 based on the feedback signal, control the magnitude of the charging current during the charging process, and control the magnitude of the discharging current during the discharging process.

Optionally, the control chip 301 adopts a digital signal processing (DSP) chip.

In the aforementioned embodiment, the capacity grading cabinet is provided with a control chip and a battery cell, the control chip being configured to receive a feedback signal from the battery cell, and control a charging and discharging process and a charging and discharging current based on the feedback signal. In the technical solution of the embodiments of the present application, adopting the control chip can effectively control the charging and discharging of the battery cell, thereby efficiently performing battery cell testing and improving the efficiency of battery production.

The technical features of the embodiments described above can be combined arbitrarily. In order to make the description concise, not all possible combinations of the technical features in the aforementioned embodiments are described. However, all the combinations of the technical features should be considered as falling within the scope described in this specification provided that they do not conflict with each other.

The above embodiments only describe several implementations of the present application for a specific and detailed understanding of the technical solution of the present application, but should not be construed as a limitation to the protection scope of the patent of the present invention. It should be noted that those of ordinary skill in the art may further make some variations and improvements without departing from the concept of the present application, all of which fall within the scope of protection of the present application. It should be understood that the technical solutions obtained by those skilled in the art through logical analysis, reasoning or limited experiments on the basis of the technical solutions provided in the present application are all within the protection scope of the attached claims described in the present application. Therefore, the scope of protection of the patent of the present application should be determined by the appended claims, and the specification and drawings can be used to explain the content of the claims.

## Claims

1. A plant power supply system, comprising a power conversion system and a busbar box, wherein the busbar box is provided with a direct current (DC) busbar, the power conversion system being connected to the DC busbar, and the DC busbar being further connected to an electrical device, wherein
the power conversion system is configured to convert alternating current (AC) power input from an external AC power source into DC power; and
the DC busbar is configured to transmit the DC power to the electrical device, and receive discharge energy from the electrical device and return the discharge energy to the electrical device.

2. The plant power supply system according to claim 1, wherein the busbar box is further provided with a DC circuit breaker, the DC circuit breaker being connected between the power conversion system and the DC busbar.

3. The plant power supply system according to claim 1, wherein the busbar box is further provided with an electrical device circuit breaker, the electrical device circuit breaker being connected between the DC busbar and the electrical device.

4. The plant power supply system according to any one of claims 1 to 3, wherein the power conversion system comprises a main power conversion system and a backup power conversion system, and the busbar box is further provided with a switching circuit breaker, the switching circuit breaker being connected to each of the main power conversion system, the backup power conversion system, and the electrical device, wherein
the switching circuit breaker is configured to, when the main power conversion system fails, disconnect a connection between the main power conversion system and the electrical device, and connect the backup power conversion system to the electrical device.

5. The plant power supply system according to claim 4, wherein a plurality of main power conversion systems, a plurality of busbar boxes, and a plurality of electrical devices are provided, and one backup power conversion system is provided, wherein
each of the main power conversion systems is connected to one of the electrical devices through a switching circuit breaker in a corresponding one of the busbar boxes; and
the backup power conversion system is connected to each of the plurality of the electrical devices through a switching circuit breaker in a respective one of the plurality of busbar boxes.

6. The plant power supply system according to any one of claims 1 to 3, wherein the busbar box further comprises an electrical device interface, the electrical device interface being connected to the electrical device.

7. The plant power supply system according to claim 6, wherein the electrical device comprises a plurality of electrical units, each of the electrical units being connected to the DC busbar through the electrical device interface.

8. The plant power supply system according to any one of claims 1 to 3, wherein a power adaptation coefficient between the power conversion system and the electrical device is within a range of 0.3 to 0.7.

9. The plant power supply system according to any one of claims 1 to 3, wherein the electrical device comprises at least one of a capacity testing machine and a cell formation machine.

10. The plant power supply system according to any one of claims 1 to 3, wherein the electrical device comprises a capacity grading cabinet, the capacity grading cabinet being connected to the DC busbar in the busbar box.

11. The plant power supply system according to claim 10, wherein the capacity grading cabinet is provided with a control chip and a battery cell,
the control chip being configured to receive a feedback signal from the battery cell, and control a charging and discharging process and a charging and discharging current based on the feedback signal.
